# EUROPÄISCHE PATENTANMELDUNG

(11) **EP 1 193 824 A2**
(43) Veröffentlichungstag der Anmeldung: **03.04.2002**
(21) Anmeldenummer: 01123143.8
(22) Anmeldetag: 27.09.2001
(51) Int. Cl.: H02H 11/00

(54) **Gegenspannungsschutzschaltung**

(30) Priorität: 28.09.2000 DE 10048184
(71) Anmelder: Delphi Technologies, Inc., Troy, MI 48007 (US)
(72) Erfinder: Hupertz, Stefan, 57462 Olpe (DE); Müller, Axel H.W., 93055 Regensburg (DE)
(74) Vertreter: Manitz, Finsterwald & Partner GbR

(57) **Zusammenfassung**

Eine elektronische Schutzschaltung zum Schutz eines über eine Gleichspannungsquelle versorgten Steuergeräts gegen eine im Fall einer Umpolung auftretende Gegenspannung umfaßt einen zwischen die Gleichspannungsquelle und das Steuergerät geschalteten Mosfet, dessen Source-Anschluß mit der positiven Klemme der Gleichspannungsquelle verbunden ist und dessen Gate-Anschluß über einen durch das Steuergerät ansteuerbaren Treiber so beaufschlagbar ist, daß der Mosfet eingeschaltet wird.

## Beschreibung

Die Erfindung betrifft eine elektronische Schutzschaltung zum Schutz eines über eine Gleichspannungsquelle versorgten Steuergeräts.

Steuergeräte bzw. deren elektronische Komponenten wie beispielsweise Signaleingangsstufen, auf der Seite niedrigen Potentials vorgesehene Treiber, auf der Seite hohen Potentials vorgesehene Treiber und Brückenschaltungen müssen gegen eine im Fall einer Umpolung auftretende Gegenspannung geschützt werden.

Die zunehmende Verwendung elektronischer Schalter wie insbesondere Transistorrelais in beispielsweise für den Fahrzeugbau bestimmten Steuereinheiten können Überlasten mit sich bringen oder sogar zu einer Zerstörung einzelner Komponenten führen. Dabei sind insbesondere die zunehmend eingesetzten, auf der Basis der n-Kanal-Mosfet-Technologie (metal-oxid-semiconductor-fet; fet = Feldeffekttransistor) hergestellten, eine innere Diode aufweisenden Komponenten wie beispielsweise auf der Seite hohen Potentials vorgesehene Treiber und Brückenschaltungen gefährdet. Ein Gegenspannungsschutz ist somit insbesondere für solche Komponenten erforderlich.

Der Erfindung liegt die Aufgabe zugrunde, eine elektronische Schutzschaltung zu schaffen, die bei einfach gehaltenem Aufbau insbesondere auch für anfälligere elektronische Komponenten des Steuergeräts einen zuverlässigen Gegenspannungsschutz gewährleistet.

Zur Lösung dieser Aufgabe wird erfindungsgemäß eine elektronische Schutzschaltung zum Schutz eines über eine Gleichspannungsquelle versorgten Steuergeräts gegen eine im Fall einer Umpolung auftretende Gegenspannung vorgeschlagen, die einen zwischen die Gleichspannungsquelle und das Steuergerät geschalteten Mosfet umfaßt, dessen Source-Anschluß mit der positiven Klemme der Gleichspannungsquelle verbunden ist und dessen Gate-Anschluß über einen durch das Steuergerät ansteuerbaren Treiber so beaufschlagbar ist, daß der Mosfet eingeschaltet wird. Als Mosfet ist vorzugsweise ein n-Kanal-Mosfet vorgesehen. Es kann sich insbesondere um einen selbstsperrenden Mosfet handeln.

Aufgrund dieser Ausbildung ist bei einfach gehaltenem Aufbau insbesondere auch für anfälligere elektronische Komponenten ein zuverlässiger Gegenspannungsschutz sichergestellt. Nachdem der Source-Anschluß des Mosfet mit der positiven Klemme der Gleichspannungsquelle verbunden ist, arbeitet der Mosfet in einem umgekehrten Betriebsmodus, was bedeutet, daß das Source-Potential einen höheren positiven Wert besitzt als das Drain-Potential. Demzufolge leitet die innere Diode des Mosfet bei korrekt angeschlossener Gleichspannungsquelle, so daß das Steuergerät bzw. dessen elektronische Komponenten mit Spannung versorgt werden. Über das Steuergerät, d.h. beispielsweise einen diesem zugeordneten Mikrocontroller, wird dann der Treiber so angesteuert, daß der Mosfet eingeschaltet wird, wodurch dessen innere Diode durch die nunmehr leitende Source-Drain-Strecke kurzgeschlossen wird. Der Spannungsabfall am Mosfet und die an diesem auftretende Verlustleistung sind auf ein Minimum reduziert. Tritt nun im Fall einer Umpolung eine Gegenspannung auf, so sperrt die innere Diode des Mosfet, und der Treiber wird auch nicht mehr durch das Steuergerät bzw. den Mikrocontroller angesteuert. Infolgedessen wird der Mosfet abgeschaltet, wodurch das Steuergerät bzw. dessen elektronischen Komponenten gegen die durch die Umpolung auftretende Gegenspannung geschützt sind. Von Vorteil ist auch, daß nunmehr ein zentraler Gegenspannungsschutz für die Signal- und die Lastseite in dem Steuergerät möglich ist. Es ist kein zusätzlicher Kondensator für Brücken bzw. das Aufschalten auf eine induktive Last mehr erforderlich. Ein eventuell vorgesehener Elektrolytkondensator zum Puffern von Spannungsspitzen kann kleiner dimensioniert oder sogar weggelassen werden, wenn der Spannungsabfall am Gleichspannungsschutzelement, d.h. dem Mosfet kleiner ist als die üblichen 0,7 V (Spannungsabfall an der Diode). Eine große Auswahl von n-Kanal-Mosfets schafft vielfältige Möglichkeiten zur Verwirklichung von Steuergeräten mit unterschiedlichen Stromanforderungen.

Die Verwendung eines Mosfet als Gegenspannungsschutzelement ist zwar bereits bekannt (vgl. z.B. EP-A2-0 854 555, EP-A2-0 626 745). Bei den bekannten Schaltungsanordnungen sind jedoch zusätzliche Schaltungsmittel erforderlich, um den Mosfet bei einer auftretenden Gegenspannung abzuschalten.

Bei einer bevorzugten Ausführungsform der erfindungsgemäßen Schutzschaltung umfaßt der den Gate-Anschluß des Mosfet beaufschlagende Treiber eine Ladungspumpe.

Der Treiber kann insbesondere über einen ohmschen Widerstand mit dem Gate-Anschluß des Mosfet verbunden sein.

Von Vorteil ist auch, wenn die Gate-Source-Strecke des Mosfet durch wenigstens eine interne Z-Diode gegen Überspannung geschützt ist. Dabei sind vorzugsweise zwei gegensinnig in Reihe geschaltete Z-Dioden vorgesehen. Diese können insbesondere über ihre Anoden miteinander verbunden sein.

Bei einer zweckmäßigen praktischen Ausführungsform ist der Drain-Anschluß des Mosfet mit einer ersten Versorgungsklemme des Steuergeräts verbunden, während eine weitere Versorgungsklemme des Steuergeräts an Masse liegt bzw. mit der negativen Klemme der Gleichspannungsquelle verbunden ist.

Wie bereits erwähnt kann der Treiber insbesondere über einen dem Steuergerät zugeordneten Mikrocontroller oder dergleichen ansteuerbar sein.

Das Steuergerät kann einen an den Drain-Anschluß des Mosfet bzw. die erste Versorgungsklemme angeschlossenen Spannungsregler umfassen. Dabei ist der Mikrocontroller vorzugsweise über diesen Spannungsregler mit Spannung versorgt.

Über die beiden Versorgungsklemmen des Steuergeräts und/oder über dessen Spannungsregler können auch weitere elektronische Komponenten mit Spannung versorgt sein. Diese elektronischen Komponenten können dem Steuergerät zugeordnet oder auch zusätzlich vorgesehen sein.

Die weiteren elektronischen Komponenten können beispielsweise wenigstens einen Treiber für ein Signalisierungselement wie insbesondere eine Lampe oder dergleichen und/oder wenigstens einen Treiber, insbesondere Brückenschaltung oder dergleichen, für einen elektrischen Antrieb umfassen.

Zweckmäßigerweise ist zumindest auch ein Teil der weiteren elektrischen Komponenten über den Mikrocontroller ansteuerbar.

In bestimmten Fällen kann es zweckmäßig sein, wenn zwischen den Drain-Anschluß des Mosfet bzw. die erste Versorgungsklemme des Steuergeräts und Masse ein Elektrolytkondensator geschaltet ist.

Die Erfindung ist grundsätzlich auch zur Sicherung anderer elektronischer Schaltungsanordnungen als Steuergeräten anwendbar.

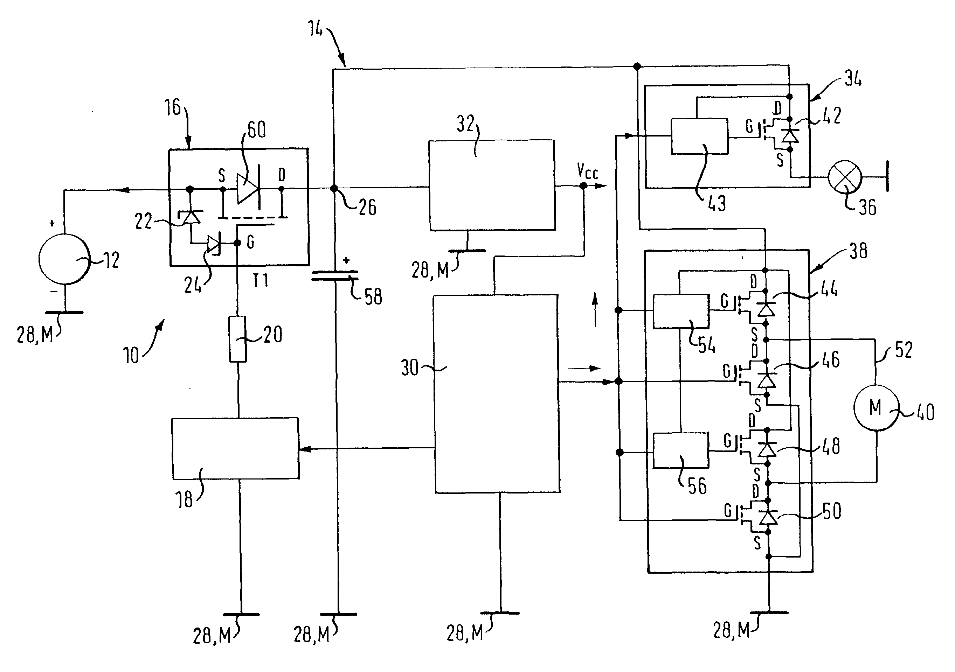

Die Erfindung wird im folgenden anhand eines Ausführungsbeispiels unter Bezugnahme auf die Zeichnung näher erläutert:

Die einzige Figur dieser Zeichnung zeigt ein Prinzipschaltbild einer beispielhaften Ausführungsform einer elektronischen Schutzschaltung 10, die dem Schutz eines über eine Gleichspannungsquelle 12 versorgten Steuergeräts 14 gegen eine Gegenspannung dient, wie sie insbesondere im Fall einer falschen Polung der Gleichspannungsquelle 12 auftreten kann.

Die elektronische Schutzschaltung 10 umfaßt einen zwischen die Gleichspannungsquelle 12 und das Steuergerät 14 geschalteten Mosfet 16, bei dem es sich insbesondere um einen n-Kanal-Mosfet handeln kann. Dieser n-Kanal-Mosfet 16 ist vorzugsweise selbstsperrend.

Wie anhand der einzigen Figur zu erkennen ist, ist der Source-Anschluß S des Mosfet 16 mit der positiven Klemme der Gleichspannungsquelle 12 verbunden. Der Gate-Anschluß G ist über einen durch das Steuergerät 14 ansteuerbaren Treiber 18 so beaufschlagbar, daß der Mosfet 16 eingeschaltet wird. Im vorliegenden Fall ist als Treiber 18 eine Ladungspumpe vorgesehen. Beim vorliegenden Ausführungsbeispiel ist dieser Treiber 18 über einen ohmschen Widerstand 20 mit dem Gate-Anschluß G des Mosfet 16 verbunden.

Die Gate-Source-Strecke des Mosfet 16 ist durch wenigstens eine interne Z-Diode, 24 gegen Überspannung geschützt. Im vorliegenden Fall sind zwei gegensinnig in Reihe geschaltete Z-Dioden 22, 24 vorgesehen, die über ihre Anoden miteinander verbunden sind.

Wie anhand der einzigen Figur zu erkennen ist, ist der Drain-Anschluß D des Mosfet 16 mit einer ersten Versorgungsklemme 26 des Steuergeräts 14 verbunden. Eine weitere Versorgungsklemme 28 des Steuergeräts 14 kann an Masse M liegen bzw. mit der negativen Klemme der Gleichspannungsquelle 12 verbunden sein.

Der insbesondere durch eine Ladungspumpe gebildete Treiber 18 kann durch einen dem Steuergerät 14 zugeordneten Mikrocontroller 30 ansteuerbar sein. Im vorliegenden Fall ist dieser Mikrocontroller 30 über einen Spannungsregler 32 mit Spannung versorgt, der an den Drain-Anschluß D des Mosfet 16 bzw. die erste Versorgungsklemme 26 des Steuergeräts 14 angeschlossen ist. Der Spannungsregler 32 kann ebenso wie der Mikrocontroller 30 insbesondere dem Steuergerät 14 zugeordnet sein.

Wie anhand der einzigen Figur zu erkennen ist, können über die beiden Versorgungsklemmen 26, 28 des Steuergeräts 14 und/oder über dessen Spannungsregler 32 weitere elektrische Komponenten mit Spannung versorgt werden. Diese weiteren Komponenten können beispielsweise einen Treiber 34 für ein Signalisierungselement 36 wie insbesondere eine Lampe oder dergleichen und/oder wenigstens einen Treiber 38, insbesondere Brückenschaltung oder dergleichen, für einen elektrischen Antrieb 40 umfassen. Im vorliegenden Fall sind auch diese weiteren elektrischen Komponenten über die Versorgungsklemmen 26, 28 des Steuergeräts 14 mit Spannung versorgt und über den Mikrocontroller 30 des Steuergeräts 14 ansteuerbar.

Der Treiber 34 umfaßt beispielsweise einen selbstsperrenden n-Kanal-Mosfet 42, dessen Gate-Anschluß G z.B. über eine durch den Mikrocontroller 30 ansteuerbare Ladungspumpe 44 beaufschlagbar ist. Der Drain-Anschluß D dieses wieder eine innere Diode aufweisenden Mosfet 42 ist an die Versorgungsklemme 26 angeschlossen.

Die weitere elektronische Komponente 38 umfaßt im vorliegenden Fall eine Brückenschaltung auf vier selbstsperrenden n-Kanal-Mosfets 44 bis 50. Dabei sind die beiden Mosfets 44, 46 und die beiden Mosfets 48, 50 jeweils in Reihe zwischen die beiden Versorgungsklemmen 26, 28 geschaltet. Der elektrische Antrieb 40 liegt in dem Brückenzweig 52, der einerseits mit der Verbindungsstelle zwischen den beiden Mosfets 44, 46 und andererseits mit der Verbindungsstelle zwischen den beiden Mosfets 48, 50 verbunden ist. Der Gate-Anschluß G des jeweils auf der Seite höheren Potentials vorgesehenen Mosfet 44 bzw. 48 ist jeweils über eine durch den Mikrocontroller 30 ansteuerbare Ladungspumpe 54 bzw. 56 beaufschlagbar. Die Drain-Anschlüsse D der beiden auf der Seite höheren Potentials liegenden Mosfets 44, 48 sind mit der Versorgungsklemme 26 verbunden, während die auf der Seite niedrigeren Potentials vorgesehenen Mosfets 46, 50 jeweils mit ihrem Source-Anschluß S an Masse M liegen. Die Gate-Anschlüsse G der auf der Seite niedrigeren Potentials liegenden Mosfets 46, 50 werden jeweils direkt vom Mikrocontroller 30 angesteuert.

Wie anhand der einzigen Figur zu erkennen ist, besitzen auch die vier Mosfets 44 bis 50 dieser Brückenschaltung 38 jeweils wieder eine innere Diode.

Zwischen den Drain-Anschluß D des Mosfet 16 bzw. die erste Versorgungsklemme 26 des Steuergeräts 14 und Masse M kann ein Elektrolytkondensator 58 geschaltet sein.

Da der n-Kanal-Mosfet 16 über seinen Source-Anschluß S mit der positiven Klemme der Gleichspannungsquelle 12 verbunden ist, arbeitet dieser Mosfet 16 in einem umgekehrten Betriebsmodus, was bedeutet, daß das Source-Potential einen höheren positiven Wert besitzt als das Drain-Potential. Demzufolge leitet die innere Diode 60 dieses Mosfet 16 bei korrekt angeschlossener Gleichspannungsquelle 12, wodurch die restliche Schaltungsanordnung mit Spannung versorgt wird. Der Mikrocontroller 30 des Steuergeräts 14 steuert den insbesondere durch eine Ladungspumpe gebildeten Treiber 18 an, wodurch der Mosfet 16 eingeschaltet und entsprechend die innere Diode 60 kurzgeschlossen wird. Der an dem Mosfet 16 auftretende Spannungsabfall sowie die an diesem Mosfet 60 auftretende Verlustleistung werden auf ein Minimum reduziert. Tritt z.B. im Fall einer falsch gepolten Gleichspannungsquelle 12 eine Gegenspannung auf, so sperrt die innere Diode 60 des Mosfet 16, und der insbesondere durch eine Ladungspumpe gebildete Treiber 18 wird nicht mehr durch den Controller 30 angesteuert, wodurch der Mosfet 60 abgeschaltet wird. Damit ist ein Gegenspannungsschutz für das Steuergerät 14 bzw. die elektronischen Komponenten 30 bis 34 und 38 gewährleistet.

### Bezugszeichenliste

- 10: elektronische Schutzschaltung
- 12: Gleichspannungsquelle
- 14: Steuergerät
- 16: Mosfet
- 18: Treiber, Ladungspumpe
- 20: ohmscher Widerstand
- 22: Z-Diode
- 24: Z-Diode
- 26: erste Versorgungsklemme
- 28: weitere Versorgungsklemme
- 30: Mikrocontroller
- 32: Spannungsregler
- 34: weitere elektronische Komponente, Treiber
- 36: Signalisierungselement, Lampe
- 38: weitere elektronische Komponente, Treiber, Brückenschaltung
- 40: elektrischer Antrieb
- 42: Mosfet
- 44: Mosfet
- 46: Mosfet
- 48: Mosfet
- 50: Mosfet
- 52: Brückenzweig
- 54: Ladungspumpe
- 56: Ladungspumpe
- 58: Elektrolytkondensator
- 60: innere Diode

- D: Drain-Anschluß
- G: Gate-Anschluß
- S: Source-Anschluß
- M: Masse

## Patentansprüche

1. Elektronische Schutzschaltung (10) zum Schutz eines über eine Gleichspannungsquelle (12) versorgten Steuergeräts (14) gegen eine im Fall einer Umpolung auftretende Gegenspannung, mit einem zwischen die Gleichspannungsquelle (12) und das Steuergerät (14) geschalteten Mosfet (16), dessen Source-Anschluß (S) mit der positiven Klemme der Gleichspannungsquelle (12) verbunden ist und dessen Gate-Anschluß (G) über einen durch das Steuergerät (14) ansteuerbaren Treiber (18) so beaufschlagbar ist, daß der Mosfet (16) eingeschaltet wird.

2. Elektronische Schutzschaltung nach Anspruch 1,
**dadurch gekennzeichnet,**
**daß** als Mosfet ein n-Kanal-Mosfet (16) vorgesehen ist.

3. Elektronische Schutzschaltung nach Anspruch 1 oder 2,
**dadurch gekennzeichnet,**
**daß** als Mosfet ein selbstsperrender Mosfet (16) vorgesehen ist.

4. Elektronische Schutzschaltung nach einem der vorhergehenden Ansprüche,
**dadurch gekennzeichnet,**
**daß** der Treiber (18) eine Ladungspumpe umfaßt.

5. Elektronische Schutzschaltung nach einem der vorhergehenden Ansprüche,
**dadurch gekennzeichnet,**
**daß** der Treiber (18) über einen ohmschen Widerstand (20) mit dem Gate-Anschluß (G) des Mosfet (16) verbunden ist.

6. Elektronische Schutzschaltung nach einem der vorhergehenden Ansprüche,
**dadurch gekennzeichnet,**
**daß** die Gate-Source-Strecke des Mosfet (16) durch wenigstens eine interne Z-Diode (22, 24) gegen Überspannung geschützt ist.

7. Elektronische Schutzschaltung nach Anspruch 6,
**dadurch gekennzeichnet,**
**daß** zwei gegensinnig in Reihe geschaltete Z-Dioden (22, 24) vorgesehen sind.

8. Elektronische Schutzschaltung nach Anspruch 7,
**dadurch gekennzeichnet,**
**daß** die beiden Z-Dioden (22, 24) über ihre Anoden miteinander verbunden sind.

9. Elektronische Schutzschaltung nach einem der vorherghenden Ansprüche,
**dadurch gekennzeichnet,**
**daß** der Drain-Anschluß (D) des Mosfet (16) mit einer ersten Versorgungsklemme (26) des Steuergeräts (14) verbunden ist und eine weitere Versorgungsklemme (28) des Steuergeräts (14) an Masse (M) liegt bzw. mit der negativen Klemme der Gleichspannungsquelle (12) verbunden ist.

10. Elektronische Schutzschaltung nach einem der vorhergehenden Ansprüche,
**dadurch gekennzeichnet,**
**daß** der Treiber (18) über einen dem Steuergerät (14) zugeordneten Mikrocontroller (30) ansteuerbar ist.

11. Elektronische Schutzschaltung nach einem der vorhergehenden Ansprüche,
**dadurch gekennzeichnet,**
**daß** das Steuegerät (14) einen an den Drain-Anschluß (D) des Mosfet (16) bzw. die erste Versorgungsklemme (26) angeschlossenen Spannungsregler (32) umfaßt.

12. Elektronische Schutzschaltung nach Anspruch 10,
**dadurch gekennzeichnet,**
**daß** der Mikrocontroller (30) über den Spannungsregler (32) mit Spannung versorgt ist.

13. Elektronische Schutzschaltung nach einem der vorhergehenden Ansprüche,
**dadurch gekennzeichnet,**
**daß** über die beiden Versorgungsklemmen (26, 28) des Steuergeräts (14) und/oder über dessen Spannungsregler (32) weitere elektronische Komponenten (34, 38) mit Spannung versorgt sind.

14. Elektronische Schutzschaltung nach Anspruch 13,
**dadurch gekennzeichnet,**
**daß** die weiteren elektronische Komponenten wenigstens einen Treiber (34) für ein Signalisierungselement (36) wie insbesondere eine Lampe oder dergleichen umfassen.

15. Elektronische Schutzschaltung nach Anspruch 13 oder 14,
**dadurch gekennzeichnet,**
**daß** die weiteren elektronische Komponenten wenigstens einen Treiber (38), insbesondere Brückenschaltung oder dergleichen, für einen elektrischen Antrieb (40) umfassen.

16. Elektronische Schutzschaltung nach einem der vorhergehenden Ansprüche,
**dadurch gekennzeichnet,**
**daß** zumindest auch ein Teil der weiteren elektronische Komponenten (34, 38) über den Mikrocontroller (30) ansteuerbar ist.

17. Elektronische Schutzschaltung nach einem der vorhergehenden Ansprüche,
**dadurch gekennzeichnet,**
**daß** zwischen den Drain-Anschluß (D) des Mosfet (16) bzw. die erste Versorgungsklemme (26) des Steuergeräts (14) und Masse (M) ein Elektrolytkondensator (58) geschaltet ist.
